# EUROPEAN PATENT APPLICATION

(11) **EP 1 650 179 A2**
(43) Date of publication of application: **26.04.2006**
(21) Application number: 05256477.0
(22) Date of filing: 19.10.2005
(51) Int. Cl.: C04B 41/89, C03C 17/34

(54) **Method of decorating a ceramic or glass article**

(30) Priority: 22.10.2004 GB 0423464
(71) Applicant: Sharma, Ram, 33 Englestede Close Birmingham B20 1BJ (GB)
(72) Inventor: Sharma, Ram, 33 Englestede Close Birmingham B20 1BJ (GB)
(74) Representative: Coates, Ian Harold

(57) **Abstract**

A method of decorating a ceramic or glass article, said method comprising the steps of:
a) mixing a metallic pigment with a resin to form a first coating mixture;
b) applying the first coating directly onto a part or substantially the whole outer surface of the ceramic or glass article;
c) once the first coating mixture is cured, applying a second coating material over the first coating mixture, wherein the second coating material is substantially dishwasher proof.

## Description

### Field of the Invention

The present invention relates to a method for decorating ceramic articles. It is particularly applicable, but in no way limited, to the application of a durable metallic finish to ceramic articles, and in particular to items of tableware and glass items.

### Background to the Invention

There are currently a wide range of decoration methods and techniques which have been applied to the decoration of ceramic articles such as tableware, eg cups, plates, mugs, teapots, glasses and the like. However, there is a constant demand for new and innovative decoration methods as old designs and finishes go out of fashion. This is particularly the case with promotional items such as mugs and glasses. The purchasers of such promotional items are continually striving for new and eye-catching finishes that will catch the imagination.

One such finish, which is unusual on ceramics, is a metal finish. Metallic finishes are not only unusual in this context but have a deep, appealing lustre that suggests opulence and luxury. A particularly appealing and unusual metallic finish in the context of tableware and glass is a bright reflective chrome finish.

Metal effects such as a chrome finish have been known for some time, although when applied to tableware items such as mugs the finish on prior art mugs is that of a dull lustre, rather than the bright reflective finish one associates with chrome. To date, there are no methods known to the applicant which provide a durable, dishwasher-proof bright metallic finish on an item of tableware or glass.

It is therefore an object of the present invention to overcome, or at least mitigate, some or all of the problems identified above and to provide a cost-effective, reliable method of applying a highly lustrous bright chrome metallic finish to an already glazed ceramic item or glassware.

### Summary of the Invention

According to a first aspect of the present invention there is provided a method of decorating a ceramic article, said method comprising the steps of:
a) mixing a metallic pigment with a resin to form a first coating mixture;
b) applying the first coating mixture directly onto a part or substantially the whole outer surface of the ceramic article;
c) once the first coating mixture is cured, applying a second coating material over the first coating mixture; wherein the second coating material is substantially dishwasher-proof.
This method provides for a bright reflective finish and produces a finished article which is both aesthetically pleasing and practical to use.

Preferably the resin employed in the first coating mixture comprises a two-part epoxy resin.

Preferably the first coating mixture also comprises a thinner.

In a preferred embodiment the ratio of resin to metallic pigment in the first coating mixture is in the range of from 1:20 to 1:40 by weight of resin to metallic pigment. This provides a strong, bright reflective finish.

More preferably the ratio of resin to metallic pigment is 1 part of resin to 30 parts of metallic pigment by weight ± 10%.
Preferably the proportion of metallic pigment in the first coating mixture is within the range 3 - 6% by weight.

More preferably the proportion of metallic pigment in the first coating mixture is within the range 4 - 5% by weight.

Preferably the first coating mixture comprises:

| | | |
|---|---|---|
| Epoxy Resin (Type 1) | 0.15 | parts by weight |
| Metasheen Type Al | 4.50 | parts by weight |
| Thinner | 95.35 | parts by weight |
| Hardener | 0.30 | parts by weight |

Preferably the second coating material is substantially transparent.

Preferably the second coating material comprises a two-part acrylic or epoxy coating including a hardener and thinner.

Preferably the first and second coatings are cured following application to the article for a period lasting from between eight to twelve minutes at 140° to 220° C.

According to a further embodiment the article is pre-coated with a coloured coat prior to applying the first coating mixture. This covers any blemishes which may be present on the surface of the article and can enhance the colour and the intensity of the metallic finish.

Preferably the first coating mixture and/or the second coating material are applied to a thickness of between 10 and 40 microns.

Where alternative coloured metallic finishes are required, a coloured pigment may be incorporated into the first coating mixture or the second coating mixture or both.

Preferably the first and/or second coatings are applied to the article by spraying. In a particularly preferred embodiment the first and/or second coatings are applied by an electrostatic spraying process.

In an alternative embodiment the first coating mixture is applied to the ceramic article by a dipping process.

Additionally the second coating material is applied by a dipping method.

Alternatively both the first coating mixture and the second coating material are applied by a dipping process.
Preferably the ceramic article is pre-heated immediately prior to the dipping stage, whereby the ceramic article is pre-heated to a temperature in the range 70° to 220° C.

Additionally or in the alternative the first coating mixture further comprises an adhesion promoter.

Preferably the proportion of adhesion promoter in the first coating mixture is within the range 0.1 % to 10% by weight, and more preferably in the range of 1.5% to 5% by weight.

In a preferred embodiment the ceramic article is an item of glazed tableware.

In a further preferred embodiment the ceramic article is an item of glassware.

### Description of the Preferred Embodiments

The basis for the present invention is the unexpected discovery that a durable, dishwasher-proof high lustre bright chrome metallic finish can be applied to a ceramic article, such as a glazed tableware item or a glass. We have found that it is possible to incorporate very fine particles of metal or metal pigment into a coating material to produce a tough, chemical resistant finish that both adheres to a glazed ceramic item or to glass when applied by spraying or dipping. The coating has sufficient integrity that, once overcoated by a topcoat, the result is an attractive, long lasting, dishwasher-proof highly reflective metallic finish.

In this context, a bright reflective metallic finish is one which has a reflection coefficient for visible light in the range of 0.5 to 1.0. More particularly the reflective coefficient is in the range 0.55 to 0.95 and more particularly in the range of 0.6 to 0.9.

An example of the present method will be described in relation to decorating a mug. A ceramic mug is formed, decorated and glazed in a conventional manner. The metallic finish can be applied over any colour of mug but certain metallic finishes, such as silver or aluminium work best against a dark background such as dark blue or black.

A first coating mixture is prepared by combining a metallic pigment formed from very fine particles of a metal such as aluminium with a resin. A two part epoxy resin is preferred and the ratio of metallic pigment to resin is important in order to produce the required bright reflective chrome finish. A preferred ratio of epoxy resin to metallic pigment is 1 part resin to 30 parts of metallic pigment. By way of a preferred range, 1 part of resin to between 20 to 40 parts of metallic pigment is preferred. This mixture of resin and metallic pigment is thinned as necessary to produce a sprayable coating material. A typical example of a first coating mixture is provided in Example 1.

A preferred metallic pigment for this application is one produced by vapour deposition, as opposed to ball milling. An example of one such pigment, or range of pigments, is commercially available from Wolstenholme International Ltd, Springfield House, Lower Eccleshill Road, Darwen, Lancashire, England BB3 0RP, under the name METASHEEN (RTM). The slurry form of this pigment was used in the following

### examples.

The first coating mixture is then applied to the outside of the mug by known spraying processes. The mixture is sprayed to provide a wet coating thickness of 20 microns. A suitable layer thickness may be between 10 and 40 microns according to colour requirements. It will be appreciated that thicker coatings may be applied or required in certain applications. The first coating mixture may be applied using either conventional spray or electrostatic disc equipment. This first coating is then cured by passing through an oven for eight to twelve minutes at 140° to 220°C.

Once the first coating mixture is cured, a second coating material is then applied over the first coating mixture to provide a durable, tough, dishwasher-proof finish. This second coating mixture may also be a two-component epoxy material such as Ceraglaze™ S 1475 clear lacquer supplied by Neogene Paints Ltd of Watford, England.

In this context it should be appreciated that the terms coating mixture and coating material have the same meaning. They relate to a composition, or a range of compositions, suitable for application to a ceramic article.

By way of example only, a coating mixture suitable for the first, metallic coat is prepared as follows:-

### Example 1

A stock mixture of epoxy resin/ metallic mixture is prepared by mixing:-

| Mixture A | % by Weight |
|---|---|
| Epoxy Resin (Type 1) | 0.15 |
| Metasheen Type Al | 4.50 |
| Thinner | 95.35 |

Immediately prior to spraying this material is mixed with hardener:-

| | % by Weight |
|---|---|
| Mixture A | 99.70 |
| Hardener | 0.30 |

A typical hardener suitable for this application is catalogue no. S1472 from Neogene Paints Ltd, Watford, England.

By way of further example, a coating mixture suitable for the second coating material is CERAGLAZE ™ SA1543G clear lacquer, supplied by Neogene Paints Ltd of Watford, England. CERAGLAZE ™ SA1543 is a high performance two-component protective clear coating designed to give a tough chemical and abrasion resistant finish to ceramic-based articles. CERAGLAZE ™ SA1543 distinguishes itself by its high volume solids at application, resulting in a high degree of gloss and image clarity. The highly modified polymer system in combination with aliphatic polyisocyanate SA1490 Hardener produces a coating film of excellent chemical and water resistance.

### Example 2

Mixing ratio for second coating material:-

| | % by weight |
|---|---|
| SA1543G clear lacquer | 60 |
| SA1490 hardener | 20 |
| M1491 thinner | 11.5 |
| M1517 thinner | 7 |
| M1492 Adhesion Promoter | 1.5 |
| | 100% |

The lacquer, hardener and thinner(s) are mixed well before adding the adhesion promoter. Viscosity should be 14 to 16 seconds measured on a DIN4 Flow Cup at 25°C.

This second coating once applied, is then cured by passing through an oven for eight to twelve minutes at 140° to 220°C.

This second coating material has the advantage that it can also act as a sublimation lacquer, enabling designs to be added directly to the outside surface of the mug after the metallic finish has been applied and set. Dye sublimation techniques and their application to mugs and other tableware items are well known to the materials expert.

A preferred method of applying the first coating mixture and the second coating material to a piece of ceramic tableware is by spraying.

The colour of the metallic finish is not limited to a silvery aluminium colour and can be varied in a number of ways.

Firstly, the base colour of the ceramic article affects the finished colour. The ceramic article may therefore be pre-sprayed with a strong colour, such as black, before this decoration method is used. This pre-spraying also has the advantage that it acts as a primer layer to cover any scratches which typically occur on black mugs. Any scratches of this type will become more apparent after the application of the metallic finish.

It will be appreciated that the substrate must be clean, free from contaminants and grease. If small areas of contamination are evident then localised cleaning with a surfactant wash is recommended. On highly contaminated articles, steam degreasing is advised.

The colour of the finished article may also be modified by incorporating a coloured pigment into one of the coating mixtures, preferably the second coating material. For example, by incorporating a red pigment the colour of an aluminium finish is modified from chrome to bronze, whilst retaining its highly reflective finish. Other colours can be incorporated to produce interesting and aesthetically appealing finishes. For example, yellow pigment produces an attractive gold metallic finish.

The term reflective in this context means that the surface of the finished article, after applying both first and second coats, including any additional coloured pigment, has a high reflection coefficient. Preferably the reflection coefficient is above 0.5 and more preferably in the range of 0.6 to 1.0.

In order to assess the reflectance of a black glazed ceramic mug coated according to Example 1, reflectance measurements were made using a 60° sheen Glossmeter. The Glossmeter was set to a reading of 100 with a standard black gloss tile. The tile was then coated according to Example 1 to give a bright lustrous chrome finish and a reading taken. The measurement was in excess of 150+ and was too great to be measured on the apparatus. By way of comparison the dull lustre finish of known mugs gave a reading of 104-108 under the same experimental conditions. It will therefore be apparent that the chrome finish produced by the method of the present invention provides an unusually high level of reflectance, not seen with previous finishes.

We have also discovered that the above methods can be applied to glass items as well as pottery or porcelain ceramics. Thus, in the context of the present invention, the term "ceramic" has a very broad meaning. It includes glass, earthenware, clayware and bone china.

It will be appreciated that various other modifications may be made without departing from the scope of the invention. Whilst it is generally preferred that the coatings should be applied to substantially the entire outer surface of the tableware item, the coatings could be applied by different techniques and perhaps only to cover part of the surface of an article to provide particular effects. Different spraying and/or curing conditions can be used etc., as are appropriate to particular material used. The technique, whilst ideally suited to decorating tableware, can be used on a wide range of ceramic articles.

A preferred method of applying the first and second coating materials to a piece of ceramic tableware is by spraying, and more preferably by electrostatic spraying. However, we have unexpectedly discovered that these coating mixtures and materials, and in particular the second coating material, may also be applied by dipping. Whilst dipping is a technique which has been used to apply glaze to the surface of an unglazed item, it has not been used to apply a coating over an already glazed, and fired, ceramic surface. It was previously considered that a dipped coating material would simply drain off the highly smooth glazed surface.

We have overcome this perceived difficulty in a number of ways. Firstly, by incorporating an adhesion promoter in the coating material, sufficient tenacity for the glazed surface is achieved. Typically the adhesion promoter is present in the range 0.1 % to 10% by weight of the coating material mixture. A preferred range is 1.5 to 5% by weight of adhesion promoter.

An example of an adhesion promoter is product code M1492 supplied by Neogene Paints Ltd, Watford, England. Alternative adhesion promoters may be selected by the material specialist. It should be noted that extensive trials are generally necessary in this field of technology. This is because the appearance of a coated finish is highly dependent on the precise nature of the coating material and how that coating material is applied. To be of any value, the finished product must appear flawless to the naked eye.

The problem of adhesion of a dipped coating has also been overcome by moving straight from the dipping stage to the curing stage. That is to say, by not giving the dipped finish time to move over the glazed surface. In addition, the tableware item may be rotated or inverted on its way to and/or during the curing phase.

In a third method the ceramic tableware items are pre-heated before the dipping stage. In that way, curing begins immediately the item is dipped into the coating material. Thus the molecular layer of dip in contact with the surface of the tableware item cures and becomes bonded to the ceramic surface. This fine layer provides a surface considerably more adhesive to the coating than the original glazed or glass surface.

Preferably the tableware item is heated to a temperature in the range of 50°C to 220°C. More preferably the temperature range is 70°C to 120°C.

These three methods are not mutually exclusive and can be used either on their own or in any suitable combination.

Whilst endeavouring in the foregoing specification to draw attention to those features of the invention believed to be of particular importance, it should be understood that the Applicant claims protection in respect of any patentable feature or combination of features hereinbefore referred to, whether or not particular emphasis has been placed thereon.

## Claims

1. A method of decorating a ceramic article, said method comprising the steps of:
a) mixing a metallic pigment with a resin to form a first coating mixture;
b) applying the first coating directly onto a part or substantially the whole outer surface of the ceramic article;
c) once the first coating mixture is cured, applying a second coating material over the first coating mixture, wherein the second coating material is substantially dishwasher proof.

2. A method according to Claim 1 wherein the resin comprises a two part epoxy resin.

3. A method according to Claim 1 or Claim 2 wherein the ratio of resin to metallic pigment in the first coating mixture is in the range of from 1:20 to 1:40 by weight of resin to metallic pigment.

4. A method according to Claim 3 wherein the ratio of resin to metallic pigment is 1 part of resin to 30 parts of metallic pigment by weight ± 10%.

5. A method according to any preceding claim wherein the first coating mixture further comprises a thinner.

6. A method according to any preceding Claim wherein the proportion of metallic pigment in the first coating mixture is within the range 3 - 6% by weight of the mixture.

7. A method according to claim 6 wherein the proportion of metallic pigment in the first coating mixture is within the range 4 - 5% by weight.

8. A method according to any preceding claim wherein the first coating mixture comprises:
| | | |
|---|---|---|
| Epoxy Resin (Type 1) | 0.15 | parts by weight |
| Metasheen Type Al | 4.50 | parts by weight |
| Thinner | 95.35 | parts by weight |
| Hardener | 0.30 | parts by weight |

9. A method according to Claim 1 wherein the second coating material is substantially transparent.

10. A method according to any preceding Claim wherein the second coating material comprises a two-part epoxy fortified acrylic resin, including an activator and a thinner.

11. A method according to any preceding Claim wherein the first coating mixture and the second coating material are cured following application to the article for a period lasting from between eight to twelve minutes at 140° to 220° C.

12. A method according to any preceding Claim wherein the article is pre-coated with a coloured coat prior to applying the first coating mixture.

13. A method according to any preceding Claim wherein the first coating mixture and/ or the second coating material are sprayed to a thickness of between 10 and 40 microns.

14. A method according to any preceding Claim wherein a coloured pigment is incorporated into the first coating mixture or the second coating material or both.

15. A method according to any preceding Claim wherein the first coating mixture and/or second coating material are applied to the article by electrostatic spraying.

16. A method according to any of Claims 1 to 12 inclusive, wherein the first coating mixture is applied to the ceramic article by a dipping process.

17. A method according to any of Claims 1 to 12 inclusive, wherein the second coating material is applied by a dipping method.

18. A method according to any of Claims 1 to 12 inclusive, wherein both the first coating mixture and the second coating material are applied by a dipping process.

19. A method according to any of Claims 16, 17 or 18, wherein the ceramic article is pre-heated immediately prior to the dipping stage.

20. A method according to Claim 19, wherein the ceramic article is pre-heated to a temperature in the range 70° to 220° C.

21. A method according to Claim 16, wherein the first coating mixture further comprises an adhesion promoter.

22. A method according to Claim 21, wherein the proportion of adhesion promoter in the first coating mixture is within the range 0.1% to 10% by weight, and more preferably in the range of 1.5% to 5% by weight.

23. A method according to any of Claims 1 to 22 inclusive wherein the ceramic article is an item of glazed tableware.

24. A method according to any of Claims 1 to 22 inclusive wherein the ceramic article is an item of glassware.

25. A ceramic article decorated according to a method according to any of claims 1 to 24 inclusive.
